# EUROPÄISCHE PATENTANMELDUNG

(11) **EP 4 485 866 A1**
(43) Veröffentlichungstag der Anmeldung: **01.01.2025**
(21) Anmeldenummer: 24178811.6
(22) Anmeldetag: 29.05.2024
(51) Int. Cl.: H04L 12/28

(54) **VERFAHREN ZUM ANSTEUERN EINES HAUSGERÄTES MITTELS EINES MOBILGERÄTES, STEUEREINHEIT UND MOBILGERÄT**

(30) Priorität: 26.06.2023 BE 202305513
(71) Anmelder: Miele & Cie. KG, 33332 Gütersloh (DE)
(72) Erfinder: Carsten, Daniel, 33615 Bielefeld (DE)

(57) **Zusammenfassung**

Die Erfindung betrifft ein Verfahren (300) zum Ansteuern eines Hausgerätes (120) mittels eines Mobilgerätes (100), wobei das Verfahren (300) einen Schritt des Einlesens (310) eines Mobilsignals (110) aufweist, das eine Position und/oder einen Abstand des Mobilgerätes (100) in Bezug zu dem Hausgerät (120) repräsentiert. Ferner umfasst das Verfahren (300) einen Schritt des Aussendens (320) eines Steuersignals (130) zum Ansteuern einer Funktion (F) des Hausgeräts (120), wobei das Aussenden ansprechend auf eine Betätigung eines Bedienelementes (135) des Mobilgerätes (100) und unter Verwendung des Mobilsignals (110) erfolgt.

## Beschreibung

Die Erfindung betrifft ein Verfahren zum Ansteuern eines Hausgerätes mittels eines Mobilgerätes, eine Steuereinheit sowie ein Mobilgerät gemäß den Hauptansprüchen.

In modernen Hausgerätebedienkonzepten soll das Bedienen eines Hausgerätes intuitiver, komfortabler und immer einfacher werden. Der Trend geht hin zu simpleren und reduzierteren Bedienungen. Für das einfachere Bedienen von mehreren Hausgeräten, z. B. aus der Ferne, kann als universelle Bedienung das Steuern über eine App, oder über Sprache genutzt werden. Allerdings sollte dabei immer das zu bedienende Gerät bei Sprachbedienung genannt, oder in der App vorab ausgewählt werden. Die Bedienfunktionalitäten der App, oder des Sprachassistenten sind dabei auch sehr zahlreich. Hausgeräte werden über die Bedienelemente am Gerät bedient. Des Weiteren können sie über eine App am Smartphone oder Tablet über diverse Remote Funktionalitäten bedient werden. Außerdem ist eine Bedienung per Sprachassistent denkbar, worüber gewisse voreingestellte Routinen ausführbar sind. Auch denkbar ist das Türschließen über einen Funktaster, der in einer Ausprägung auch außerhalb des Gerätes in der Nähe z. B. an einer Küchenmöbelfront fest angebracht wird. Denkbar ist weiterhin auch das Auslösen von Gerätefunktionen und Routinen über einen Knopf eines fest verorteten "Dash-Button", oder eines "Smart Hubs.

Der hier vorgestellte Ansatz stellt sich die Aufgabe, ein verbessertes Verfahren zum Ansteuern eines Hausgerätes mittels eines Mobilgerätes, eine verbesserte Steuereinheit und ein verbessertes Mobilgerät zu schaffen.

Erfindungsgemäß wird diese Aufgabe durch ein verbessertes Verfahren zum Ansteuern eines Hausgerätes mittels eines Mobilgerätes, eine verbesserte Steuereinheit und ein verbessertes Mobilgerät mit den Merkmalen bzw. Schritten der Hauptansprüche gelöst. Vorteilhafte Ausgestaltungen und Weiterbildungen der Erfindung ergeben sich aus den nachfolgenden Unteransprüchen.

Der hier vorgestellte Ansatz schafft ein Verfahren zum Ansteuern eines Hausgerätes mittels eines Mobilgerätes, wobei das Verfahren die folgenden Schritte umfasst:
- Einlesen eines Mobilsignals, das eine Position und/oder einen Abstand des Mobilgerätes in Bezug zu dem Hausgerät repräsentiert; und
- Aussenden eines Steuersignals zum Ansteuern einer Funktion des Hausgeräts, wobei das Aussenden ansprechend auf eine Betätigung eines Bedienelementes des Mobilgerätes und unter Verwendung des Mobilsignals erfolgt.

Unter einem Hausgerät kann beispielsweise ein Küchengerät wie ein Herd, ein Kühlschrank, eine Mikrowelle oder dergleichen oder allgemein auch ein Reinigungsgerät wie beispielsweise eine Waschmaschine oder ein Trockner verstanden werden. Unter einem Mobilsignal kann vorliegend ein Signal verstanden werden, welches die Position und/oder den Abstand des Mobilgerätes in Bezug zu dem Hausgerät repräsentiert. Dabei kann das Mobilsignal beispielsweise durch eine entsprechende Einheit bzw. einen Sensor des Mobilgerätes selbst generiert werden, indem beispielsweise ein elektromagnetisches Feld oder entsprechende Wellen ausgewertet werden, die von dem Hausgerät ausgesandt werden. Durch das Hausgerät wird somit beispielsweise eine Identifikation geliefert, welcher Art oder welchen Typs das Hausgerät ist oder direkt welches Einzelgerät, das heißt welches unterscheidbare Gerät das Hausgerät darstellt. Durch die Auswertung dieser Informationen kann beispielsweise ein Rückschluss auf die Anordnung des Mobilgerätes zu dem Hausgerät oder auf den Abstand zwischen dem Hausgerät und dem Mobilgerät geschlossen werden. Unter einem Mobilgerät kann beispielsweise ein am Körper tragbares mobiles Gerät verstanden werden, wie beispielsweise eine intelligente Uhr, ein Smartphone ein Tablett-Computer, ein in eine Kleidung integriertes elektronisches Gerät oder dergleichen verstanden werden. Alternativ können auch "mixed reality"-Brillen darunter verstanden werden. Unter einem Bedienelement kann beispielsweise ein Taster oder Druckknopf verstanden werden, der durch eine manuelle Betätigung, beispielsweise ein Drücken, aktiviert oder betätigt wird. Denkbar ist auch, dass das Bedienelement als Mikrofon zur Aufzeichnung eines Sprachkommandos als Betätigung ausgestaltet ist.

Hier vorgeschlagene Ansatz basiert auf der Erkenntnis, dass eine Aktivierung oder Ansteuerung eine Funktion des Hausgeräts des für einen Nutzer des Hausgerätes besonders komfortabel und einfach ausgeführt werden kann, wenn der Benutzer die Ansteuerung dieser Funktion durch eine einfache Betätigung des Bedienelemente seines Mobilgerätes vornehmen kann, während dieses Mobilgerät sich in einer bestimmten Position oder den Abstand zu dem Hausgerät befindet. Hierdurch kann beispielsweise erreicht werden, dass der Nutzer, wenn er sich beispielsweise sehr nahe an einem bestimmten Hausgerät befindet, zumindest eine vordefinierte Funktion dieses Hausgerät durch das kognitiv wenig anspruchsvolle Betätigen des Bedienelementes aktivieren kann. Beispielsweise kann eine solche vorbestimmte Funktion eine Funktion sein, die häufig wiederkehrend oder eine für den Betrieb des Hausgeräts eine wichtige Informationsfunktion ist, beispielsweise die Abfrage einer Restbackzeit eines Backofens, wenn der Nutzer beispielsweise einen Kuchen bäckt und nicht ständig direkt am Backofen als Hausgerät einen entsprechenden Bedienknopf in gebückter Haltung betätigen möchte.

Der hier vorgeschlagene Ansatz bietet somit den Vorteil, zumindest die Ansteuerung einer bestimmten Funktion des Hausgerätes sehr komfortabel durch die Betätigung des Bedienelementes seines Mobilgerätes vornehmen zu können. Auf diese Weise steigt die Akzeptanz und den Nutzerkomfort, den der Nutzer durch die Verwendung des hier vorgestellten Konzepts bei der Bedienung des Hausgeräts erreichen kann.

Besonders günstig ist eine Ausführungsform des hier vorgeschlagenen Ansatzes, bei der im Schritt des Einlesens das Mobilsignal ferner einen Typ eines Hausgerätes und/oder ein individuell unterscheidbares Hausgerät repräsentiert, zu dem das Mobilgerät positioniert ist und wobei im Schritt des Aussendens das Steuersignal abhängig von dem Typ und/oder dem unterscheidbaren Hausgerät ausgesandt wird, insbesondere wobei das Steuersignal derart ausgesandt wird, dass für zumindest jedes von zwei unterschiedlichen Typen von Hausgeräten oder unterscheidbaren Hausgeräten je eine unterschiedliche Funktion angesteuert wird. Eine solche Ausführungsform des hier vorgeschlagenen Ansatzes bietet den Vorteil, durch die Unterscheidung des Typs des Hausgerätes oder des individuell unterscheidbaren Hausgerätes aus einer Information des Mobilsignals, beispielsweise auch mehrere Hausgeräte mit dem gleichen Mobilgerät ansteuern zu können, wobei für jedes der Hausgeräte oder Typen der Hausgeräte eine unterschiedliche Funktion angesteuert wird. Eine solche Ausführungsform ermöglicht somit die komfortable Steuerung mehrerer Hausgeräte bzw. die Ansteuerung von unterschiedlichen Funktionen dieser Hausgeräte mit dem (einzigen) Mobilgerät des Nutzers. Der Nutzer bzw. Nutzerin des Mobilgerätes erfährt somit eine weitere Erhöhung der Einsatzmöglichkeiten des Mobilgerätes zur Steuerung von Funktionen unterschiedlichster Hausgeräte.

Gemäß einer weiteren Ausführungsform des hier vorgeschlagenen Ansatzes kann im Schritt des Aussendens das Steuersignal derart ausgesandt werden, dass in Abhängigkeit eines Abstands des Mobilgerätes von dem Hausgerät eine von mehreren unterschiedlichen mittels des Mobilgerätes ansteuerbaren Funktionen angesteuert wird. Eine solche Ausführungsform bietet den Vorteil, auch unterschiedliche Funktionen des Hausgeräts mit dem Mobilgerät ansteuern zu können, je nachdem wie nahe der Nutzer das Mobilgerät des Hausgeräts bringt. Hierdurch wird ebenfalls eine weitere Erhöhung der Einsatzmöglichkeiten des hier vorgestellten Ansatzes erreicht.

Denkbar ist ferner eine Ausführungsform des hier vorgeschlagenen Ansatzes, bei der im Schritt des Einlesens das Mobilsignal eingelesen wird, das eine Position und/oder einen Abstand des Mobilgerätes in Bezug zu einem weiteren Hausgerät repräsentiert, wobei im Schritt des Aussendens das Steuersignal derart ausgesandt wird, dass in demjenigen Hausgerät eine Funktion angesteuert wird, das einen geringeren Abstand zu dem Mobilgerät aufweist. Eine solche Ausführungsform des hier vorgeschlagenen Ansatzes bietet den Vorteil, dass auch eine Funktion eines Hausgerätes angesteuert werden kann, das in einem räumlich engen Bereich zu benachbarten Hausgeräten angeordnet ist, wobei auch möglicherweise für diese in benachbarten angeordneten Hausgeräten entsprechende Funktionen mittels des Mobilgerätes bei entsprechend geringem Abstand angesteuert werden können. Durch die Auswahl der Ansteuerung einer Funktion desjenigen Hausgeräts, welches den geringeren Abstand zu Mobilgerät hat, lässt sich somit für den Nutzer sehr schnell und intuitiv das Mobilgerät direkt an das anzusteuernde Hausgerät halten und das Betätigungselement betätigen, um die entsprechende Funktion.

Von Vorteil ist weiterhin eine Ausführungsform des hier vorgeschlagenen Ansatzes, bei der im Schritt des Aussendens das Steuersignal derart ausgesandt wird, dass je nach Zeitpunkt, zu dem das Mobilsignal eingelesen wird, durch das Steuersignal eine von mehreren mittels des Mobilgerätes ansteuerbaren Funktionen (für das Hausgerät) angesteuert wird. Eine solche Ausführungsform bietet den Vorteil, je nach Zeitpunkt, beispielsweise morgens oder abends, unterschiedliche Funktionen des (gleichen) Hausgeräts ansteuern zu können. Auf diese Weise kann beispielsweise ein tageszeitlich unterschiedliches Nutzungsverhalten des Hausgeräts abgebildet und mit hohem Nutzerkomfort angesteuert werden.

Besonders günstigen Ausführungsform des hier vorgeschlagenen Ansatzes, bei der in einem wiederholt ausgeführten Schritt des Aussendens ansprechend auf die Betätigung des gleichen Bedienelementes des Mobilgerätes das Steuersignal zu einem Ansteuern einer gegenüber einer vorausgegangenen angesteuerten Funktion unterschiedlichen Funktion des Hausgerätes oder zu einem Ansteuern einer Funktion eines anderen Hausgerätes ausgesandt wird. Eine solche Ausführungsform des hier vorgeschlagenen Ansatzes bietet den Vorteil, dass beispielsweise auf oder in dem Mobilgerät lediglich ein (zentrales) Bedienelement vorgehalten werden braucht, um die entsprechenden Funktionen des Hausgeräts bzw. der Hausgeräte ansteuern zu können. Der Nutzer oder die Nutzerin kann somit die Steuerung der Funktion des Hausgeräts durch die Betätigung des (einzigen und/oder zentralen) Bedienelements sehr einfach und intuitiv erlernen.

Besonders flexibel einsetzbar ist eine Ausführungsform des hier vorgeschlagenen Ansatzes mit einem Schritt des Einstellens einer Funktion des Hausgeräts, die durch das Steuersignal anzusteuern ist. Auf diese Weise lässt sich vorteilhaft diejenige Funktion des Hausgeräts aktiv auswählen bzw. einstellen, die für einen Benutzer den größten Komfort bietet, wenn er oder sie das Betätigungselement des Mobilgeräts betätigt.

Besonders günstig ist eine Ausführungsform des hier vorgeschlagenen Ansatzes, bei der im Schritt des Einlesens eine Position und/oder ein Abstand des des Mobilgerätes in Bezug zu dem Hausgerät unter Verwendung eines Sensors, insbesondere eines UWB-Funkmoduls, eines Bluetooth-Funkmoduls, eines WLAN-Funkmoduls, eines Radar-Moduls, eines Lidar-Moduls und/oder einer Kameraeinheit ermittelt wird. Eine solche Ausführungsform des hier vorgeschlagenen Ansatzes bietet den Vorteil, bereits breit verfügbare, kostengünstige und präzise messende Elemente zur Bestimmung des Abstands und/oder der Position des Mobilgeräts in Bezug zu dem Hausgerät zu verwenden.

Besonders einfach und komfortabel für den Nutzer ist eine Ausführungsform des hier vorgeschlagenen Ansatzes, bei der im Schritt des Aussendens das Steuersignal von einem am Körper tragbaren oder getragenen Mobilgerät, insbesondere einer intelligenten Uhr, einem Mobiltelefon und/der einem Tablet-Computer ausgesandt wird. Eine solche Ausführungsform lässt sich technisch sehr leicht realisieren, da derartige Ausführungsformen von Mobilgeräten meist breit verfügbar sind und lediglich durch ein entsprechendes Software-Update bzw. eine App für die Realisierung des hier vorgeschlagenen Ansatzes ergänzt werden brauchen.

Gemäß einer weiteren Ausführungsform des hier vorgeschlagenen Ansatzes kann ein Schritt des Empfangens einer Information von dem Hausgerät vorgesehen sein, ansprechend auf ein ausgesandtes Steuersignal, insbesondere wobei im Schritt des Aussendens als Funktion des Hausgerätes eine Aussendung der Information durch das Hausgerät angesteuert wird und/oder wobei im Schritt des Empfangens die Information ferner an einen Nutzer des Mobilgerätes ausgegeben wird. Eine solche Ausführungsform bietet den Vorteil, nicht nur direkt das entsprechende bzw. gewünschte Hausgerät mit der jeweiligen Funktion anzusteuern, sondern auch direkt eine Kommunikation aufzubauen, um beispielsweise Informationen über den Betrieb des Hausgeräts abrufen und anzeigen zu können, was sich als eine deutliche Erhöhung des Nutzerkomforts für die Verwendung des betreffenden Hausgeräts durch den Nutzer des Mobilgerätes auszeichnen kann.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Gemäß einer weiteren vorteilhaften Ausführungsform wird ein Mobilgerät mit einer Variante einer hier beschriebenen Steuereinheit vorgestellt. Auch durch eine solche Ausführungsform können die hier beschriebenen Vorteile des Konzeptes effizient realisiert werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiel eines Mobilgeräts;
- Figur 2A: eine schematische Darstellung eines Einsatzszenarios des hier vorgestellten Ansatzes;
- Figur 2B: eine schematische Darstellung eines weiteren Einsatzszenarios des hier vorgestellten Ansatzes;
- Figur 2C: eine schematische Darstellung eines weiteren Einsatzszenarios des hier vorgestellten Ansatzes;
- Figur 2D: eine schematische Darstellung eines anderen Einsatzszenarios des hier vorgestellten Ansatzes; und
- Figur 3: ein Ablaufdiagramm eines Ausführungsbeispiels als Verfahren zum Ansteuern eines Hausgerätes mittels eines Mobilgerätes.

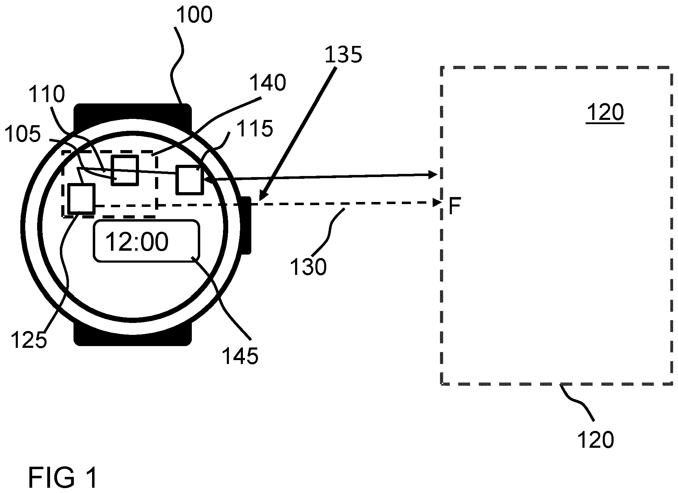

Figur 1 zeigt eine schematische Darstellung eines Ausführungsbeispiel eines Mobilgeräts 100, dass hier beispielsweise als intelligente Uhr bzw. Smart Watch ausgestaltet ist. Denkbar ist jedoch auch die Ausgestaltung des Mobilgeräts 100 als Mobiltelefon oder Tablet-Computer. Das Mobilgerät 100 umfasst eine Schnittstelle 105 zum Einlesen eines Mobilsignals 110, das beispielsweise von einem Sensor 115 des Mobilgerät 100 bereitgestellt wird. Der Sensor 115 kann beispielsweise ein elektrisches oder magnetisches Feld auswerten oder auch auf eine andere Weise erkennen, in welcher Lage bzw. Position und/oder in welchem Abstand sich das Mobilgerät 100 von einem Hausgerät 120 befindet. Denkbar ist auch, dass das Hausgerät 120 selbst ein solches Signal aussendet, wenn es die Anwesenheit des Mobilgerätes 120 sensiert. Weiterhin weist das Mobilgerät eine Aussendeeinheit 125 auf, die ausgebildet ist, um eine Funktion F des Hausgerät 120 anzusteuern, indem die Aussendeeinheit 125 ein Steuersignal 130 an das Hausgerät 120 aussendet. Um dieses Steuersignal 130 auszusenden ist es jedoch erforderlich, dass ein Nutzer des Mobilgerät 100 ein Bedienelement 135 wie beispielsweise den in der Figur 1 dargestellten Bedienknopf des Mobilgerät 100 als Bedienelement 135 betätigt. Hierbei kann ausgenutzt werden, dass als Bedienelement 135 ein seitlich sehr gut erreichbarer, zentraler Knopf verwendet wird, sodass dieser sehr einfach zu finden und zu drücken ist, ohne dass der Nutzer auf die Uhr bzw. allgemein das Mobilgerät 100 schauen müsste. Durch das Betätigen, insbesondere das Drücken des Bedienelementes 135 kann somit eine Funktion F des Hausgerät 120 oder eine Routine als Abfolge von unterschiedlichen Aktionen oder Funktionen im Hausgerät 120 angesteuert oder gestartet werden. Durch den hier vorgestellten Ansatz können somit ortsabhängig und beispielsweise je nach Typ oder individuellem Hausgerät 120 unterschiedliche Funktionen F aktiviert werden, beispielsweise je nachdem vor oder in der Nähe welchen Hausgeräts 120 sich der Nutzer aktuell befindet. Die Schnittstelle 105 und die Aussendeeinheit 125 können zusammengefasst als Steuereinheit 140 verstanden werden. Auch kann das Mobilgerät 100 eine Anzeigeeinheit 145 aufweisen, über welche beispielsweise Informationen an einen Nutzer des Mobilgerätes 100 ausgegeben werden wie beispielsweise eine aktuelle Uhrzeit oder Informationen, die von dem Hausgerät 120 ansprechend auf das Steuersignal 130 selbst ausgesandt werden.

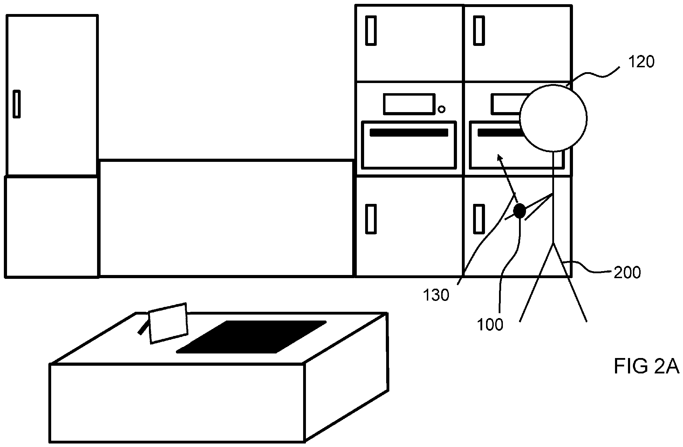

Figur 2A zeigt eine schematische Darstellung eines Einsatzszenarios des hier vorgestellten Ansatzes. Ein Nutzer 200 trägt hierbei, beispielsweise an seinem Arm, das Mobilgerät 100 in Form einer intelligenten Uhr (smart watch). Durch das Drücken des in der Figur 1 dargestellten Bedienelements 135 und der Kenntnis, dass der Benutzer 200 sich in der unmittelbaren Nähe des Hausgeräts 120 befindet, welches hier beispielsweise als ein Heißgerät wie beispielsweise eine Mikrowelle oder im Backofen realisiert ist, kann der Nutzer 200 mittels des Mobilgeräts 100 das Steuersignal 130 an das Hausgerät 120 aussenden, um die Funktion F auszulösen, die beispielsweise in der Öffnung der Türe dieses Hausgeräts 120 besteht. Auf diese Weise lässt sich intuitiv und sehr komfortabel das Hausgerät 120 bedienen.

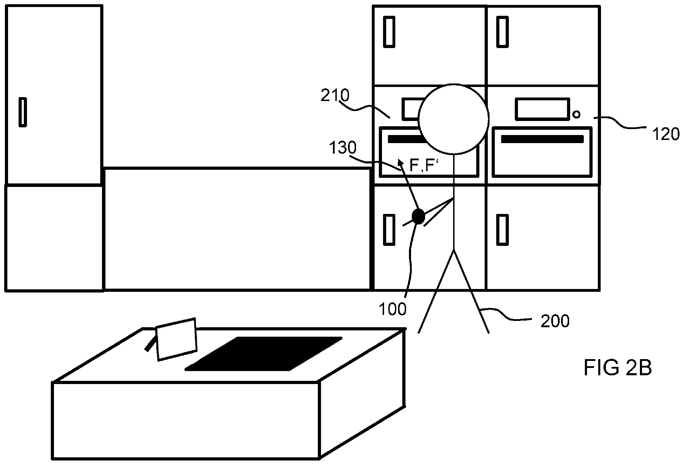

Figur 2B zeigt eine schematische Darstellung eines weiteren Einsatzszenarios des hier vorgestellten Ansatzes. Hierbei befindet sich der Nutzer 200 mit seinem Mobilgerät 100 vor einem weiteren Hausgerät 210, das beispielsweise ebenfalls als ein Heißgerät wie ein Backofen oder eine Mikrowelle ausgestaltet ist. Jedoch kann der in dem Mobilgerät 100 verbaute Sensor 115 nun erkennen, dass es sich um ein anderes Hausgerät als das zuvor bediente Hausgerät 120 handelt. Dies kann beispielsweise durch eine Auswertung eines von dem weiteren Hausgerät 120 abgestrahlten Signals zur Identifizierung dieses weiteren Hausgeräts 120 erfolgen. Drückt der Nutzer 200 nun wieder das in der Figur 1 dargestellte Bedienelement 135 in unmittelbarer Nähe des weiteren Hausgerät 210, kann in dem weiteren Hausgerät 210 ebenfalls die Funktion F oder eine andere Funktion F' aktiviert werden. Beispielsweise kann ebenfalls eine Öffnung der Türe des weiteren Hausgerät 210 bewirkt werden oder aber es kann durch das Steuersignal 130 ein Licht in einem Innenraum des weiteren Hausgerät 210 eingeschaltet werden. Hierbei ist es von Vorteil, dass die Ansteuerung des weiteren Hausgerät ebenfalls wieder durch das (gleiche) Bedienelement 135 des Mobilgerät 100 gemäß der Figur 1 ausgeführt wird, sodass der Nutzer bei 100 gewohnheitsmäßig immer nur ein einzelnes Element des Mobilgerät 100 betätigen braucht, um eine entsprechende Funktion bei dem Hausgerät 120 bzw. dem weiteren Hausgerät 210 zu aktivieren. Denkbar ist auch, dass die entsprechende am oder im Hausgerät 120 bzw. weiteren Hausgerät 210 auszuführende Funktion F bzw. F' entweder direkt in der Aussendeeinheit 125 abgespeichert und mittels des Steuersignals 130 an das Hausgerät 120 bzw. das weitere Hausgerät 210 übertragen wird. Alternativ kann auch im Hausgerät 120 oder im weiteren Hausgerät 210 hinterlegt sein, welche Funktion F bzw. F' nach dem Erhalt des Steuersignals 130 ausgeführt werden soll.

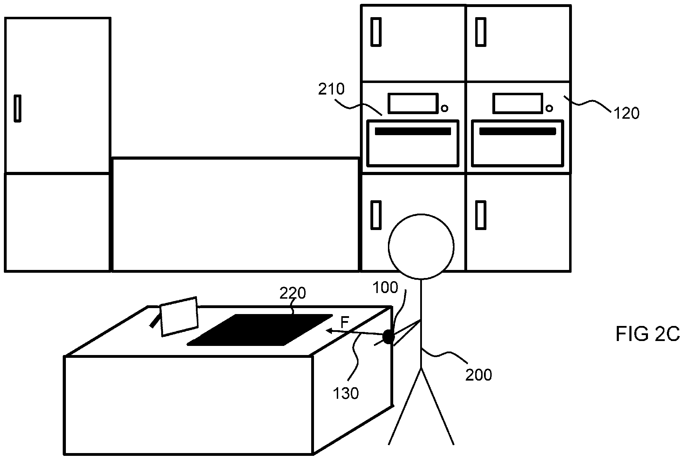

Figur 2C zeigt eine schematische Darstellung eines weiteren Einsatzszenarios des hier vorgestellten Ansatzes. In diesem Fall befindet sich der Nutzer 200 mit dem Mobilgerät 100 in der Nähe eines anderen Hausgeräts 220, dass hier als Kochfeld ausgestaltet ist. Der in Figur 1 dargestellte Sensor 115 kann dies beispielsweise dadurch erkennen, dass möglicherweise vom Hausgerät 120 und/oder weiteren Hausgerät 210 abgestrahlte Positionssignale im Mobilgerät 100 nur noch schwach empfangen werden können, wogegen ein vom anderen Hausgerät 220 abgestrahltes Positionssignal an der aktuellen Position des Nutzers 200 als sehr stark empfangen wird. In diesem Fall kann nun der Nutzer 200 durch das Betätigen des Bedienelementes 135 gemäß der Darstellung aus Figur 1 nun ein Steuersignal 130 an das andere Hausgerät 220 aussenden, um eine entsprechende Funktion F in diesem anderen Hausgerät 220 zu aktivieren. Diese Funktion F kann beispielsweise darin bestehen, dass ein oder mehrere Heizzonen des als Kochfeld ausgestalteten anderen Hausgerät 220 aktiviert oder eingeschaltet werden.

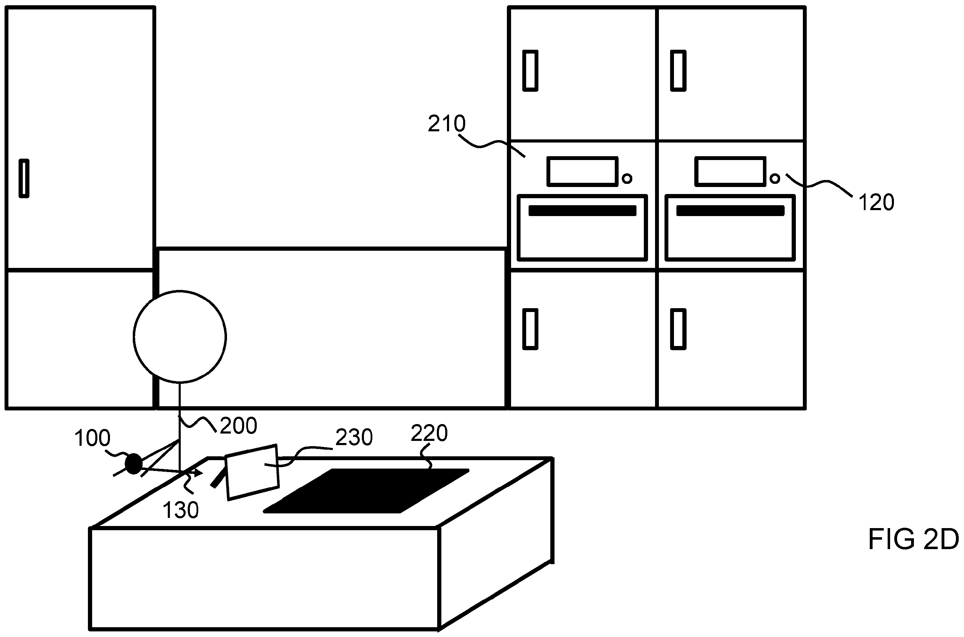

Figur 2D zeigt eine schematische Darstellung eines anderen Einsatzszenarios des hier vorgestellten Ansatzes. Hierbei befindet sich der Nutzer 200 in der Nähe einer Anzeigeeinheit 230, die beispielsweise als ein Tablet-Computer ausgestaltet ist. Denkbar ist auch, dass die Anzeigeeinheit 230 direkt in das Mobilgerät 100 des Nutzers integriert ist, wie dies durch die Anzeigeeinheit 145 in der Fig. 1 dargestellt ist. Wird nun beispielsweise durch den Sensor 115 gemäß der Darstellung aus Figur 1 erkannt, dass der Nutzer von dem Hausgerät 120, dem weiteren Hausgerät 210 und/oder dem anderen Hausgerät 220 sehr weit entfernt ist, kann durch die Ausgabe des Steuersignals 130 nach einem Betätigen des Bedienelementes des Mobilgerätes 100 beispielsweise die Anzeigeeinheit 230 eingeschaltet werden und eine Oberfläche zur Bedienung der Hausgeräte 120, 210 und/oder 220 eingeschaltet werden.

Mit dem hier vorgestellten Ansatz soll somit die Bedienung von mehreren Hausgeräten komfortabler und einfacher gestaltet werden. Speziell durch ein mitgeführtes Wearable als Mobilgerät 100 mit einer vereinfachten Bedienung, können beispielsweise ortsabhängig bestimmte Hausgeräte aktiviert und darüber bestimmte Gerätefunktionen oder Routinen ausgelöst werden. Die Bedienung kann dadurch intuitiver gestaltet werden, also dies herkömmlich der Fall ist. Eine Anzahl von erforderlichen Bedienelementen am Mobilgerät könnten damit reduziert werden. Mehrere Bedienelemente an einem smarten Device oder in einer App können damit ebenfalls reduziert werden, da dieselben Bedienelemente in dem Mobilgerät ortsabhängig verschiedene Hausgeräte bedienen und Gerätefunktionen auslösen können.

Um den hier vorgestellten Ansatz zu implementieren, kann der Nutzer ist mit einem Wearable bzw. allgemein einem Mobilgerät 100 ausgestattet sein, welches über mindestens einen, einfach zu bedienenden Button, Taster, Knopf, oder ähnlich simpel zu betätigenden Mechanismus verfügt, was hier allgemein als Bedienelement bezeichnet wird. Als explizites Beispiel dient die aktuelle eine intelligente Uhr, welche beispielsweise über eine "Aktionstaste" an der Seite verfügt. Der Nutzer trägt beispielsweise diese Uhr als Mobilgerät in der Regel den ganzen Tag am Handgelenk, so dass die Aktionstaste jederzeit einfach zu betätigen ist. Der Nutzer kann durch Betätigung der Aktionstaste des Mobilgerätes eine vorher individuell einstellbare Funktion oder Routine des Hausgerätes aufrufen. In Verbindung mit einer Lokalisierung des Nutzers speziell in Bezug zu dem Hausgerät, kann die Funktion orts- und/oder abstandsabhängig realisiert sein. So kann der Nutzer günstigerweise für jedes Hausgerät eine individuell vorgesehene Funktion festlegen, die durch Betätigung der Aktionstaste ausgelöst wird, wenn er sich in der Nähe eines bestimmten Gerätes befindet. Drückt der Nutzer die Taste bzw. das Bedienelement, während er vor dem Kühlschrank steht, öffnet sich beispielsweise die automatische Tür als angesteuerte Funktion F. Drückt der Nutzer das Bedienelement, während er vor dem Backofen als Hausgerät steht, wird die Innenraumbeleuchtung als Funktion F angesteuert. Betätigt der Nutzer das Bedienelement, während er am Raum mit der Waschmaschine vorbeikommt, wird beispielsweise die Restlaufzeit des Waschprogramms als angesteuerte Funktion akustisch ausgegeben. Drückt der Nutzer das Bedienelement, während er vor dem Saugroboter als Hausgerät steht, so wird dieser beispielsweise aktiviert und beginnt zu saugen. Falls eingestellt ist, dass der Saugroboter einen Bereich zum Saugen zugewiesen bekommen soll, kann beispielsweise die nächste Betätigung der Aktionstaste als der aktuell lokalisierte Ort des Nutzers als Bereich zum Saugen festgelegt werden, an dem der Saugroboter das Reinigen beginnen soll.

Es können alternativ oder zusätzlich auch für ein bestimmtes Hausgerät abstands- und/oder ortsabhängige Funktionen aufgerufen werden. Das Betätigen des Tasters als Bedienelement, während der Nutzer weiter entfernt steht, kann ein Programm des Backofens als Hausgerät starten, aber als andere Funktion F die Tür öffnen, sofern der Nutzer unmittelbar vor dem Backofen steht. Die Funktionen F oder F' können auch zeitabhängig festgelegt sein. So kann das Betätigen des Tasters als Bedienelement am Morgen die Ausgabe eines Milchkaffees, am Nachmittag aber eines Espressos am Kaffeeautomaten als Hausgerät ansteuern. Es kann auch in der Taste bzw. dem Mobilgerät hinterlegt sein, dass als Funktion ein Sprachassistent aktiviert und ein vereinfachtes Sprachkommando an das nächstgelegene Hausgerät geschickt werden soll. Ebenso kann in der Taste bzw. dem Bedienelement oder dem Mobilgerät allgemein hinterlegt sein, dass in der Nähe eines smarten Displays bzw. einer Anzeigeeinheit als Hausgerät, dieses startet und eine entsprechende Benutzeroberfläche zur Ansteuerung von weiteren Hausgeräten öffnet. Neben der Betätigung eines Bedienelementes in der intelligenten Uhr und jeder weiteren Smart Watch als Mobilgerät kann das Wearable bzw. Mobilgerät ein In-ear-Kopfhörer sein, ein Taster an einem intelligenten Armband, einem Ring, oder einem intelligenten Kleidungsstück, in das eine kleine Elektronik mit Funktechnik eingearbeitet wurde. Unter einem intelligenten Gegenstand kann hierbei ein Gegenstand verstanden werden, der eine Rechnereinheit umfasst, die zur Prozessierung von Steuerbefehlen ausgebildet ist. Eine Kochschürze in dem ein solches Device bzw. eine Rechnereinheit eingearbeitet wurde, könnte so als Mobilgerät bei einem Kochprozess unterstützen, indem durch ein solches Mobilgerät auch ein Kochfeld oder ein Backofen als Hausgerät angesteuert werden kann.

Ein wichtiger Aspekt kann dabei darin gesehen werden, dass das Gerät mobil ist und vom Nutzer mitgeführt werden kann und in der Regel auch wird. Auf diese Weise lässt sich die Funktionalität der Orts- und Abstandsabhängigkeit sinnvoll umsetzen. Die Lokalisierung kann beispielsweise über UWB (UWB = Ultra wide band) erfolgen. Mittels dieser Technologie lässt sich beispielsweise der Abstand über ein UWB-Funkmodul in den Hausgeräten und einen UWB-Sensor im Wearable bz. Mobilgerät zentimetergenau bestimmen. Durch Richtungsabhängigkeiten, oder Triangulation lässt sich neben dem radialen Abstand auch die genaue Lokalisierung in einem Raum bestimmen, in dem sich das Hausgerät bzw. das Mobilgerät befindet. Dadurch lässt sich eine sehr genaue Ortsabhängigkeit in den hinterlegten Funktionen realisieren. Etwas gröber ließen sich auch Lokalisierungen mittels Bluetooth oder WiFi realisieren. Es könnten zur Lokalisierung des Nutzers auch Kamerasysteme, oder Präsenzdetektoren wie z. B. ein Radar- oder ein Time-of-Flight-Sensor benutzt werden. Es kann aber auch sichergestellt werden, dass über die Präsenzerkennung und Lokalisierung auch der Nutzer erkannt wird, der die Taste bzw. das Bedienelement am Wearable bzw. Mobilgerät gedrückt bzw. betätigt hat. Bei einem Kamerasystem könnte dieses das Betätigen der Taste erkennen und zeitlich mit dem Eingang des Signals des Wearables abgleichen.

Gegenüber dem hier vorgestellten Ansatz ist dagegen bisher eine Bedienung von Hausgeräten auf die Betätigung von Bedienelementen am Hausgerät selbst beschränkt. Der Nutzer sollte auf diese Bedienelemente für ein fehlerfreies Bedienen schauen, da die Anzahl an Bedienelementen so groß ist, dass dies selten ohne Hinschauen funktioniert. Die Remote Bedienalternativen sind einmal über eine App, die ebenso ein Hinschauen zum fehlerfreien Bedienen erfordert, sowie die Bedienung über einen Sprachassistenten, der ein zusammenhängendes Sprachkommando zum Erkennen des Bedienwunsches benötigt. Eine hausgeräteabhängige Routine kann voreingestellt werden. Diese sollte allerdings für jedes Hausgerät unter einem eigenen Namen abgespeichert werden. Es erfordert dann weiterhin eine gewisse kognitive Anstrengung seitens des Nutzers eine für das jeweilige Hausgerät passende Routine zu starten.

Das vereinfachte Starten einer voreingestellten Routine mit nur einem Knopfdruck kann beispielsweise zur Bestellung von Konsumgütern verwendet werde. Hier kann für jeden Artikel ein eigenes Bedienelement vorgesehen sein der allerdings fest verortet ist und gegebenenfalls nur zeitabhängige Funktionen und Routinen auslösen kann. Es kann auch noch die Möglichkeit vorgesehen sein, beispielsweise mit einem Doppelklick eine weitere Funktion oder Routine abzuspeichern, die durch das Steuersignal ausgelöst werden soll. Der Vorteil des hier beschriebenen Ansatzes ist darin zu sehen, dass das zu bedienende Gerät ein ortsveränderliches Wearable bzw. Mobilgerät ist, das der Nutzer mit sich führt und überall dort ist, wo sich der Nutzer gerade befindet. So können neben zeitabhängigen Funktionen und Routinen auch ortsabhängige Funktionen im Speicher abgelegt werden, die je nach Ort und Nähe zu bestimmten Hausgeräten ausgelöst werden können. Die Bedienung durch beispielsweise das Drücken einer einzelnen am Wearable vorhandenen Taste erfordert am wenigsten kognitive Denkleistung und der Nutzer braucht nicht zum Wearable hinschauen, um die richtige Taste zu treffen. Das Betätigen erfolgt meist intuitiv. Wenn beispielsweise das Drücken der Taste als Funktion ansteuert, dass eine Hausgerätetür öffnet und dies bei allen Hausgeräten mit automatisch öffnender Tür eingespeichert ist, dann wird dieser Vorgang für den Nutzer sehr intuitiv. Steht der Nutzer vor einem seiner Hausgeräte und drückt die Taste, so öffnet sich als angesteuerte Funktion die jeweilige Tür. Es kann auch eine vereinfachte Sprachbedienung hinterlegt werden. Steht der Nutzer vor einem Hausgerät und drückt die Taste, so geht der nächste Sprachbefehl direkt an das Hausgerät. Ein Sprachkommando wie "20 min." kann im jeweiligen Gerätekontext dann zu einer Programmlaufzeit von 20 min. führen. Der Nutzer kann auch ein Abschalten als anzusteuernde Funktion hinterlegen und so, wie mit einer TV-Fernbedienung, von Raum zu Raum gehen und in der Nähe stehend jedes Hausgerät komfortabel ausschalten.

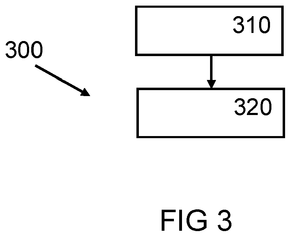

Figur 3 zeigt ein Ablaufdiagramm eines Ausführungsbeispiels als Verfahren 300 zum Ansteuern eines Hausgerätes mittels eines Mobilgerätes, wobei das Verfahren 300 einen Schritt 310 des Einlesens eines Mobilsignals umfasst, das eine Position und/oder einen Abstand des Mobilgerätes in Bezug zu dem Hausgerät repräsentiert. Ferner umfasst das Verfahren 300 einen Schritt 320 des Aussendens eines Steuersignals zum Ansteuern einer Funktion des Hausgeräts, wobei das Aussenden ansprechend auf eine Betätigung eines Bedienelementes des Mobilgerätes und unter Verwendung des Mobilsignals erfolgt.

## Patentansprüche

1. Verfahren (300) zum Ansteuern eines Hausgerätes (120) mittels eines Mobilgerätes (100), wobei das Verfahren (300) die folgenden Schritte umfasst:
- Einlesen (310) eines Mobilsignals (110), das eine Position und/oder einen Abstand des Mobilgerätes (100) in Bezug zu dem Hausgerät (120) repräsentiert; und
- Aussenden (320) eines Steuersignals (130) zum Ansteuern einer Funktion (F) des Hausgeräts (120), wobei das Aussenden ansprechend auf eine Betätigung eines Bedienelementes (135) des Mobilgerätes (100) und unter Verwendung des Mobilsignals (110) erfolgt.

2. Verfahren (300) gemäß Anspruch 1, wobei im Schritt (310) des Einlesens das Mobilsignal (100) ferner einen Typ eines Hausgerätes (120) und/oder ein individuell unterscheidbares Hausgerät (120) repräsentiert, zu dem das Mobilgerät (100) positioniert ist und wobei im Schritt (320) des Aussendens das Steuersignal (130) abhängig von dem Typ und/oder dem unterscheidbaren Hausgerät (120) ausgesandt wird, insbesondere wobei das Steuersignal (130) derart ausgesandt wird, dass für zumindest jedes von zwei unterschiedlichen Typen von Hausgeräten (120) oder unterscheidbaren Hausgeräten (120) je eine unterschiedliche Funktion (F, F`) angesteuert wird.

3. Verfahren (300) gemäß einem der vorangegangenen Ansprüche, wobei im Schritt (320) des Aussendens das Steuersignal (130) derart ausgesandt wird, dass in Abhängigkeit eines Abstands des Mobilgerätes (100) von dem Hausgerät (120) eine von mehreren mittels des Mobilgerätes (100) ansteuerbaren Funktionen (F, F`) angesteuert wird.

4. Verfahren (300) gemäß einem der vorangegangenen Ansprüche, wobei im Schritt (310) des Einlesens das Mobilsignal (110) eingelesen wird, das eine Position und/oder einen Abstand des Mobilgerätes (100) in Bezug zu einem weiteren Hausgerät (210) repräsentiert, wobei im Schritt (320) des Aussendens das Steuersignal (130) derart ausgesandt wird, dass in demjenigen Hausgerät (210, 120) eine Funktion (F, F`) angesteuert wird, das einen geringeren Abstand zu dem Mobilgerät (100) aufweist.

5. Verfahren (300) gemäß einem der vorangegangenen Ansprüche, wobei im Schritt (320) des Aussendens das Steuersignal (130) derart ausgesandt wird, dass je nach Zeitpunkt, zu dem das Mobilsignal (110) eingelesen wird, durch das Steuersignal (130) eine von mehreren mittels des Mobilgerätes (100) ansteuerbaren Funktionen (F, F`) angesteuert wird.

6. Verfahren (300) gemäß einem der vorangegangenen Ansprüche, wobei in einem wiederholt ausgeführten Schritt (320) des Aussendens ansprechend auf die Betätigung des gleichen Bedienelementes (135) des Mobilgerätes (100) das Steuersignal (130) zu einem Ansteuern einer gegenüber einer vorausgegangenen angesteuerten Funktion (F) unterschiedlichen Funktion (F`) des Hausgerätes (120) oder zu einem Ansteuern einer Funktion (F, F`) eines anderen Hausgerätes (210, 220) ausgesandt wird.

7. Verfahren (300) gemäß einem der vorangegangenen Ansprüche, mit einem Schritt des Einstellens einer Funktion (F, F`) des Hausgeräts (120), die durch das Steuersignal (130) anzusteuern ist.

8. Verfahren (300) gemäß einem der vorangegangenen Ansprüche, bei dem im Schritt (310) des Einlesens eine Position und/oder ein Abstand des Mobilgerätes (100) in Bezug zu dem Hausgerät (120) unter Verwendung eines Sensors (115), insbesondere eines UWB-Funkmoduls, eines Bluetooth-Funkmoduls, eines WLAN-Funkmoduls, eines Radar-Moduls, eines Lidar-Moduls und/oder einer Kameraeinheit ermittelt wird.

9. Verfahren (300) gemäß einem der vorangegangenen Ansprüche, wobei im Schritt (320) des Aussendens das Steuersignal (130) von einem am Körper tragbaren oder getragenen Mobilgerät (100), insbesondere einer intelligenten Uhr, einem Mobiltelefon und/der einem Tablet-Computer ausgesandt wird.

10. Verfahren (300) gemäß einem der vorangegangenen Ansprüche, mit einem Schritt des Empfangens einer Information von dem Hausgerät (120), ansprechend auf ein ausgesandtes Steuersignal (130), insbesondere wobei im Schritt (320) des Aussendens als Funktion (F) des Hausgerätes (120) eine Aussendung der Information durch das Hausgerät (120) angesteuert wird und/oder wobei im Schritt des Empfangens die Information ferner an einen Nutzer (200) des Mobilgerätes (100) ausgegeben wird.

11. Steuereinheit (140), die ausgebildet ist, um die Schritte (310, 320) des Verfahrens (300) gemäß einem der vorangegangenen Ansprüche in entsprechenden Einheiten (105, 125) auszuführen und/oder anzusteuern.

12. Mobilgerät (100) mit einer Steuereinheit (140) gemäß Anspruch 11.

13. Computer-Programmprodukt mit Programmcode zur Durchführung des Verfahrens (300) nach einem der Ansprüche 1 bis 10, wenn das Computer-Programmprodukt auf einer Steuereinheit (140) gemäß Anspruch 11 ausgeführt wird.
